Europäisches Patentamt

European Patent Office

Office européen des brevets

(11) Numéro de publication : **0 300 857 B1**

# (12) FASCICULE DE BREVET EUROPEEN

(45) Date de publication du fascicule du brevet :
**18.12.91 Bulletin 91/51**

(51) Int. Cl.⁵ : **B60T 13/52, B23P 11/00**

(21) Numéro de dépôt : **88401632.0**

(22) Date de dépôt : **27.06.88**

(54) Procédé d'assemblage d'un servomoteur et servomoteur assemblé suivant ce procédé.

(30) Priorité : **21.07.87 FR 8710277**

(43) Date de publication de la demande :
**25.01.89 Bulletin 89/04**

(45) Mention de la délivrance du brevet :
**18.12.91 Bulletin 91/51**

(84) Etats contractants désignés :
**DE ES FR GB IT**

(56) Documents cités :
**EP-A- 0 169 632**
**FR-A- 1 327 468**
**FR-A- 2 087 075**
**FR-A- 2 443 602**
**FR-A- 2 560 332**
**US-A- 3 158 930**
**US-A- 4 531 578**

(73) Titulaire : **BENDIX EUROPE Services Techniques S.A.**
**126 rue de Stalingrad**
**F-93700 Drancy (FR)**

(72) Inventeur : **Gautier, Jean-Pierre**
**46 Ter Avenue Louis Blanc**
**F-93600 Aulnay Sous Bois (FR)**

(74) Mandataire : **Lejet, Christian**
**Bendix Europe Service Techniques Service Brevets 126 rue de Stalingrad**
**F-93700 Drancy (FR)**

## Description

La présente invention concerne un procédé d'assemblage par sertissage de deux pièces en forme générale de flasque, pouvant notamment être mis en oeuvre pour l'assemblage du cylindre et du couvercle d'un servomoteur du type à dépression tel qu'utilisé pour l'assistance au freinage des véhicules automobiles.

On connaît des servomoteurs du type à dépression utilisables notamment pour l'assistance au freinage de véhicules automobiles. Un tel servomoteur est décrit dans le document EP-A-0072602. Il comporte un couvercle et un cylindre de tôle sertis à leur périphérie. Il est connu de réaliser le sertissage par cisaillement et déformation simultanée de zones régulièrement réparties angulairement sur la périphérie du couvercle. Ce procédé présente plusieurs inconvénients, notamment au niveau de l'effort du sertissage. Compte tenu de l'opération simultanée de cisaillement et de déformation de la tôle, il est nécessaire d'utiliser sous un effort important, un poinçon présentant un profil spécial avec des risques de rebut en cas de positionnement imparfait de l'outil ou d'usure ce celui-ci. De plus, il se produit très souvent un écaillage de l'enduit de protection de la tôle au niveau de la zone déformée, et la partie cisaillée n'est pas protégée.

Pour pallier cet inconvénient, il est connu, du document FR-A-2443602, de pratiquer préalablement au sertissage des lumières oblongues dans l'une des pièces pour déterminer des zones de moindre résistance pouvant être déformées par simple enfoncement pour onduler le bord extérieur. Le poinçon à utiliser une fonctionne alors plus en cisaillement, ce qui diminue sensiblement les risques de rebut pour cause de positionnement imparfait.

Ce document décrit donc un procédé d'assemblage du type énoncé dans le préambule de la première revendication.

Toutefois, la déformation de la lèvre et, ultérieurement, les micro-mouvements relatifs entre la lèvre déformée et le rebord s'appuyant sur la lèvre, déterminent des sources de corrosion inacceptables notamment pour les servomoteurs à dépression pour l'assistance au freinage équipant les véhicules automobiles.

La présente invention a donc pour but d'améliorer la protection contre la corrosion d'un assemblage par sertissage du type de celui décrit dans le document précité.

L'invention concerne généralement un procédé d'assemblage par sertissage de deux pièces métalliques affectant une forme générale de flasque, notamment pour servomoteur d'assistance au freinage du type à dépression, dont le première présente un rebord s'étendant vers l'extérieur et la seconde une zone marginale dont une première partie est sensiblement parallèle audit rebord et une deuxième partie, dans laquelle a été pratiquée une pluralité de lumières oblongues régulièrement réparties, dont l'axe longitudinal est parallèle audit rebord et la lèvre proche du bord libre de ladite deuxième partie est perpendiculaire audit rebord qu'elle entoure, ladite première pièce étant emboîtée dans la seconde après avoir disposé entre elle un joint déformable et enfermé les autres composants de l'ensemble fini, le procédé comprenant de plus les étapes suivantes :

— on presse les deux pièces l'une contre l'autre de manière à écraser ledit joint ;
— on emboutit les zones de moindre résistance situées entre la lèvre de chaque lumière proche dudit bord libre de ladite deuxième partie et ledit bord libre ;
— on relâche la pression tendant à écraser le joint.

Selon l'invention les deux pièces sont recouvertes d'un enduit de protection après qu'on ait pratiqué la pluralité de lumières oblongues et avant emboutissage des zones de moindre résistance, ces dernières étant embouties de manière telle que la zone médiane de la lèvre emboutie s'écarte du plan parallèle au rebord et passant par les extrémités de la lèvre.

De préférence, l'étape d'emboutissage est réalisée au moyen d'un poinçon dont la surface de travail présente un axe perpendiculaire à l'axe des lumières et non parallèle à la zone à emboutir, la pression étant exercée sur le poinçon perpendiculairement à la zone à emboutir. Alternativement, elle est réalisée au moyen d'un poinçon dont la surface de travail présente un axe perpendiculaire à l'axe des lumières et à l'axe selon lequel est exercée la pression requise, ce dernier présentant un angle aigu avec la perpendiculaire à la zone à emboutir.

De manière à favoriser le contrôle de la qualité des ensembles ainsi obtenus, on préfère que la largeur des lumières soit telle qu'elle permette un contrôle visuel de la mise en place du joint.

Bien évidemment les lumières affectent de préférence soit une forme ovale soit une forme sensiblement rectangulaire.

La présente invention sera mieux comprise et d'autres buts, avantages et caractéristiques de celle-ci apparaîtront plus clairement à la lecture de la description qui suit d'un mode de réalisation préféré donné à titre non limitatif et à laquelle une planche de dessins est jointe sur laquelle :

— la Figure 1 est une vue de profil d'un servomoteur assemblé selon l'invention ;
— la Figure 2 est une vue en coupe partielle selon la ligne A-A du servomoteur de la Figure 1, et
— la Figure 3 est une vue partielle agrandie d'une coupe diamétrale du servomoteur de la Figure 1.

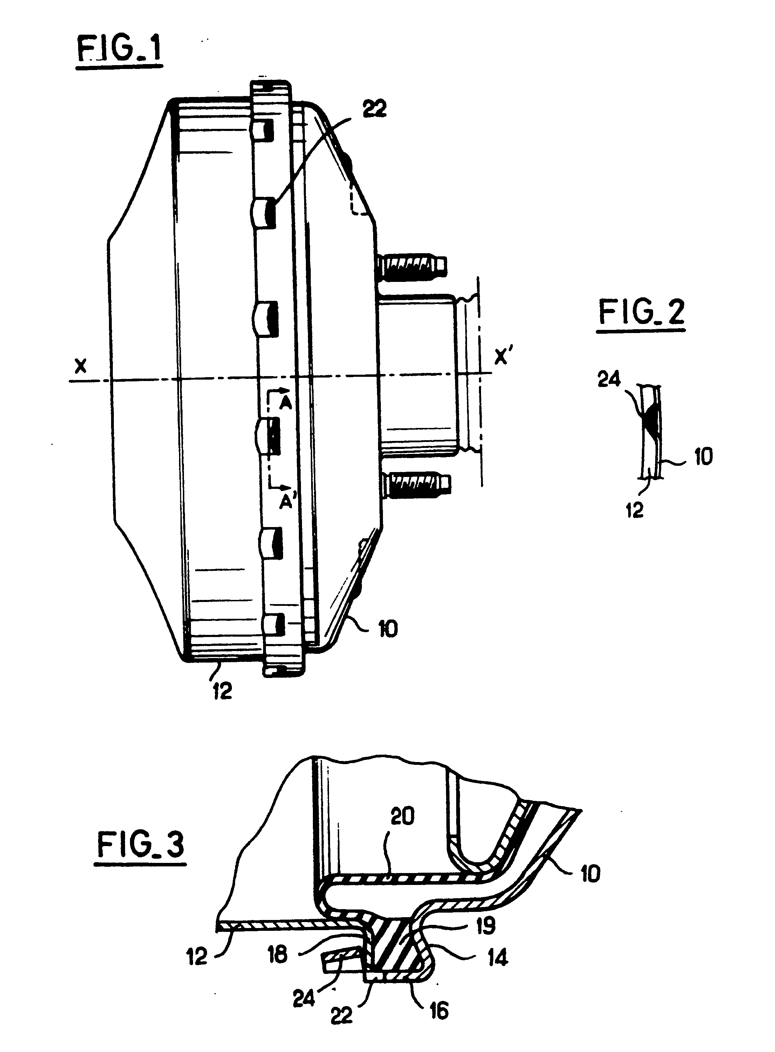

Si on considère les figures, le servomoteur comporte un couvercle de tôle 10 serti à sa périphérie sur un cylindre de tôle 12. Le cylindre 10 et le couvercle 12 présentent une symétrie de révolution autour de l'axe XX' illustré à la Figure 1. D'une façon générale, le servomoteur illustré à la Figure 1 est du type décrit dans le document EP-A-0072602 auquel on pourra se reporter en ce qui concerne la structure des divers éléments constitutifs et le fonctionnement du servomoteur. Un tel servomoteur est utilisé pour l'assistance au freinage de véhicules automobiles.

Avant assemblage du servomoteur, on réalise par emboutissage à la périphérie du couvercle 10, un épaulement radial 14 suivi d'une projection cylindrique 16 adjacente au bord libre du couvercle.

D'une façon semblable, on réalise par emboutissage à la périphérie du cylindre 12 un épaulement radial 18. Comme illustré à la Figure 3, les deux épaulements 14, 18 et la projection périphérique 16 réalisent après assemblage du servomoteur un évidement annulaire dans lequel est emprisonné de façon classique le bourrelet extérieur 19 de la membrane 20 du piston (non représenté) du servomoteur. Cette membrane est réalisée en matériau élastomère.

On réalise par découpe des lumières oblongues 22 sur la projection périphérique 16 selon une répartition angulaire régulière comme illustrée sur la Figure 1. A titre d'exemple non limitatif, les lumières sont sensiblement rectangulaires, de 3 millimètres de large sur 15 millimètres de long. Ces lumières définissent ainsi avec le bord libre de la projection périphérique des zones de plus faible résistance 24 qui seront déformées lors du sertissage final du couvercle sur le cylindre après montage des divers composants internes du servomoteur notamment la mise en place du bourrelet 19 comme illustré sur la Figure 3.

Postérieurement à la phase de découpage des lumières 22 mais avant le sertissage final, on dispose un enduit de protection (tel que vernis ou peinture) sur l'ensemble des pièces et notamment sur le chant de la tôle ainsi découpée pour améliorer la tenue à la corrosion. La largeur prévue pour les lumières est suffisante pour permettre une bonne pénétration de l'enduit dans les lumières.

De préférence, cette largeur sera telle que l'on pourra aisément effectuer un contrôle visuel de la membrane après sertissage.

Conformément à l'invention, pour l'assemblage, on presse tout d'abord le couvercle 10 contre le cylindre 12, de manière à écraser le bourrelet 19 de la membrane 20 entre les deux épaulements 14 et 18. On emboutit alors les zones de plus faible résistance 24 situées entre la lèvre de chaque lumière 22 et le bord libre de la projection périphérique 16, de telle manière que la zone médiane de la lèvre emboutie s'écarte de l'épaulement 18, les extrémités de la lèvre restant proche dudit épaulement. Enfin, on relâche la pression appliquée sur les deux pièces.

De ce fait, la partie médiane de la lèvre n'est pas en contact avec l'épaulement 18 et ne constitue plus une source de corrosion.

Pour ce faire, il faut bien entendu que l'étape d'emboutissage soit réalisée de façon spéciale. On peut par exemple utiliser un poinçon dont la section dans le plan contenant l'axe de la surface de travail et la force de poussée, affecte la forme générale d'un trapèze rectangle, le côté en regard de la partie à emboutir étant biseauté de telle façon que la surface de travail du poinçon entre d'abord en contact avec la zone à emboutir au niveau de la lèvre de la lumière et n'entre en contact avec la partie opposée qu'après emboutissage partiel de la zone. Dans ce cas, la force appliquée au poinçon reste perpendiculairement à la zone à emboutir.

De façon alternative, la section précédemment décrite peut être de forme rectangulaire, la force appliquée au poinçon étant alors oblique par rapport à la zone à emboutir.

Bien que l'invention ait été décrite en référence à un servofrein à dépression pour assistance au freinage de véhicules automobiles, il est évident qu'elle peut également s'appliquer à l'assemblage de tout autre ensemble, de forme cylindrique ou non. En pratique elle trouve son application pour l'assemblage de toutes pièces métalliques devant être protégées contre la corrosion.

## Revendications

1. Procédé d'assemblage par sertissage de deux pièces métalliques (12, 10) affectant une forme générale de flasque, notamment pour servomoteur d'assistance au freinage du type à dépression, dont la première (12) présente un rebord (18) s'étendant vers l'extérieur et la seconde (10) une zone marginale dont une première partie (14) est sensiblement parallèle audit rebord (18) et une deuxième partie (16), dans laquelle a été pratiquée une pluralité de lumières oblongues (22) régulièrement réparties, dont l'axe longitudinal est parallèle audit rebord (18) et la lèvre proche du bord libre de ladite deuxième partie (16) en fin d'opération, est perpendiculaire audit rebord qu'elle entoure, ladite première pièce (12) étant emboîtée dans la seconde après avoir disposé entre elle un joint déformable (19) et enfermé les autres composants de l'ensemble fini, ledit procédé comprenant de plus les étapes suivantes :

— on presse les deux pièces l'une contre l'autre de manière à écraser ledit joint (19),

— on emboutit les zones de moindre résistance (24) situées entre la lèvre de chaque lumière proche dudit bord libre de ladite deuxième partie (10) et ledit bord libre,

— on relâche la pression tendant à écraser le joint (19), ledit procédé étant caractérisé en ce que les dites deux pièces (10, 12) sont recouvertes d'un enduit de protection après qu'on ait pratiqué la dite pluralité de lumières oblongues (22) et avant emboutissage des dites zones de moindre résistance (24) et que les dites zones de moindre résistance (24) sont embouties de manière telle que la zone médiane de la lèvre emboutie s'écarte du plan parallèle audit rebord et passant par les extrémités de ladite lèvre.

2. Procédé selon la revendication 1 caractérisé en ce que l'étape d'emboutissage est réalisée au moyen d'un poinçon dont la surface de travail présente un axe perpendiculaire à l'axe des dites lumières et non parallèle à la dite zone à emboutir, la pression étant exercée sur le poinçon perpendiculairement à la zone à emboutir.

3. Procédé selon la revendication 1 caractérisé en ce que l'étape d'emboutissage est réalisée au moyen d'un poinçon dont la surface de travail présente un axe perpendiculaire à l'axe des dites lumières et à l'axe selon lequel est exercée la pression requise, ce dernier présentant un angle aigu avec la perpendiculaire à la zone à emboutir.

4. Procédé selon l'une quelconque des revendications précédentes caractérisé en ce que la largeur des dites lumières (22) est telle qu'elle permet un contrôle visuel de la mise en place du dit joint.

5. Procédé selon l'une quelconque des revendications précédentes caractérisé en ce que les dites lumières affectent une forme ovale.

6. Procédé selon l'une quelconque des revendications 1 à 4, caractérisé en ce que les dites lumières affectent une forme sensiblement rectangulaire.

7. Servomoteur assemblé selon le procédé revendiqué dans l'une quelconque des revendications précédentes.


**Patentansprüche**

1. Verfahren zur Montage zweier die allgemeine Form eines Schildes besitzender metallischer Teile (12, 10), insbesondere für einen Unterdruck-Bremshilfemotor, durch Verstemmen, wobei das erste Teil (12) einen nach außen sich erstreckenden umgebogenen Rand (18) aufweist und das zweite Teil (10) eine Randzone, von der ein erster Teil (14) zum umgebogenen Rand (18) im wesentlichen parallel ist, und einen zweiten Abschnitt (16) aufweist, in dem eine Mehrzahl von gleichmäßig verteilten Langlöchern (22) ausgebildet worden sind, deren Längsachse zum umgebogenen Rand parallel ist und deren Randfläche in der Nähe der freien Kante des zweiten Abschnitts (16) am Ende des Vorgangs senkrecht zum umgebogenen Rand, den sie umgibt, ist, wobei das erste Teil (12) in das zweite eingepaßt wird, nachdem zwischen ihnen eine verformbare Dichtung (19) angeordnet worden ist und die anderen Bauteile der Endeinheit eingeschlossen worden sind, wobei das Verfahren außerdem die folgenden Schritte umfaßt :
— Pressen der zwei Teile gegeneinander, derart, daß die Dichtung (19) eingedrückt wird,
— Stauchen derjenigen Zonen mit geringerer Festigkeit (24), die sich zwischen der Randfläche eines jeden Langlochs in der Nähe der freien Kante des zweiten Teils (10) und der freien Kante befinden,
— Abschwächen des Drucks, der bestrebt ist, die Dichtung (19) einzudrücken,
wobei das Verfahren dadurch gekennzeichnet ist, daß die zwei Teile (10, 12) von einem Schutzüberzug überzogen werden, nachdem die Mehrzahl der Langlöcher (22) ausgebildet worden ist und bevor die Zonen mit geringerer Festigkeit (24) gestaucht werden, und daß die Zonen mit geringerer Festigkeit (24) so gestaucht werden, daß die mittlere Zone der gestauchten Randfläche aus der Ebene, die zum umgebogenen Rand parallel ist, entfernt und über die Enden der Randfläche hinaus bewegt wird.

2. Verfahren gemäß Anspruch 1, dadurch gekennzeichnet, daß der Schritt des Stauchens mittels eines Dorns ausgeführt wird, dessen Wirkfläche eine zur Mittellinie der Langlöcher senkrechte und zur zu stauchenden Zone nicht parallele Mittelachse aufweist, wobei der Druck auf den Dorn senkrecht zur zu stauchenden Zone ausgeübt wird.

3. Verfahren gemäß Anspruch 1, dadurch gekennzeichnet, daß der Schritt des Stauchens mittels eines Dorns ausgeführt wird, dessen Wirkfläche eine Mittelachse aufweist, die zur Mittelachse der Langlöcher und zur Achse, entlang der der erforderliche Druck ausgeübt wird, senkrecht ist, wobei die letztgenannte Achse zur Normalen der zu stauchenden Zone einen spitzen Winkel aufweist.

4. Verfahren gemäß einem der vorangehenden Ansprüche, dadurch gekennzeichnet, daß die Breite der Langlöcher (22) derart ist, daß sie eine Sichtkontrolle der Anordnung der Dichtung ermöglichen.

5. Verfahren gemäß einem der vorangehenden Ansprüche, dadurch gekennzeichnet, daß die Langlöcher eine ovale Form besitzen.

6. Verfahren gemäß einem der Ansprüche 1 bis 4, dadurch gekennzeichnet, daß die Langlöcher eine im wesentlichen rechtwinklige Form besitzen.

7. Servomotor, der gemäß dem Verfahren, das in einem der vorangehenden Ansprüche beansprucht wird, montiert wird.


**Claims**

1. Process for the assembly by crimping of two metal pieces (12, 10) assuming the general form of a cup, in particular for a servomotor of the vacuum type for boosting braking, of which the first (12) has a rim (18) extending outwards and the second (10) a marginal zone, of which a first part (14) is substantially parallel to the said rim (18) and of which a second part (16), in which a plurality of uniformly distributed oblong slots (22) has been made, of which the longitudinal axis is parallel to the said rim (18) and the lip is near the free edge of the said second part (16) at the end of the operation, is perpendicular to the said rim which it surrounds, the said first piece (12) being fitted into the second, after a deformable gasket (19) has been arranged between them and the other components of the finished assembly have been enclosed, the said process also involving the following steps :

— the two pieces are pressed against one another so as to crush the said gasket (19),

— the zones of less resistance (24) located between the lip of each slot near the said free edge of the said second part (10) and the said free edge are stamped, and

— the pressure tending to crush the gasket (19) is released,

the said process being characterized in that the said two pieces (10, 12) are covered with a protective coating after the said plurality of oblong slots (22) have been made and before the said zones of less resistance (24) have been stamped, and in that the said zones of less resistance (24) are stamped in such a way that the middle zone of the stamped lip moves away from the plane parallel to the said rim and passing through the ends of the said lip.

2. Process according to Claim 1, characterized in that the stamping step is carried out by means of a punch, the working surface of which has an axis perpendicular to the axis of the said slots and not parallel to the said zone to be stamped, the pressure being exerted on the punch perpendicularly to the zone to be stamped.

3. Process according to Claim 1, characterized in that the stamping step is carried out by means of a punch, the working surface of which has an axis perpendicular to the axis of the said slots and to the axis having an acute angle relative to the perpendicular to the zone to be stamped.

4. Process according to any one of the preceding claims, characterized in that the width of the said slots (22) is such that it allows a visual check of the positioning of the said gasket.

5. Process according to any one of the preceding claims, characterized in that the said slots assume an oval form.

6. Process according to any one of Claims 1 to 4, characterized in that the said slots assume a substantially rectangular form.

7. Servomotor assembled according to the process claimed in any one of the preceding claims.

# FIG.1

22

X ————————— X'

A
A'

10

12

# FIG.2

24

10

12

# FIG.3

20

10

12    18    19

24    14

22    16